# EUROPÄISCHE PATENTSCHRIFT

(11) **EP 1 561 623 B1**
(45) Veröffentlichungstag und Bekanntmachung des Hinweises auf die Patenterteilung: **04.11.2009**
(21) Anmeldenummer: 05002063.5
(22) Anmeldetag: 01.02.2005
(51) Int. Cl.: B60J 10/00, B60J 10/08

(54) **Fingerschutzleiste mit elektrischem Schaltkontakt gegen Einklemmen**
Anti-jam finger guard with electric switch contact
Profil anti pince-doigts avec un contact d'interrupteur électrique

(30) Priorität: 03.02.2004 DE 102004005289; 29.04.2004 DE 102004021158; 23.09.2004 DE 202004014861 U
(43) Veröffentlichungstag der Anmeldung: 10.08.2005
(73) Patentinhaber: GUMMI-WELZ GmbH u. Co. KG GUMMI-KUNSTSTOFFTECHNIK-SCHAUMSTOFFE, 89231 Neu-Ulm (DE)
(72) Erfinder: Schiffers, Dr. Herbert, 89275 Elchingen (DE); Fritsche, Wolfgang, 89134 Blaustein (DE); Schneider, Reiner, 89079 Ulm-Gögglingen (DE); Zeissler, Jörg, 89275 Elchingen-Thalfingen (DE); Lahmer, Andreas, 34128 Kassel (DE)
(74) Vertreter: König, Beate

(56) Entgegenhaltungen:
- EP-A- 0 280 191
- EP-A- 1 378 388
- EP-A2- 1 361 096
- WO-A-00/70179
- DE-A1- 19 943 152
- GB-A- 2 300 732

## Beschreibung

Die Erfindung betrifft eine Fingerschutzleiste mit elektrischem Schaltkontakt.

Gummielastische Dichtungen für Türen von Nutzfahrzeugen, insbesondere für die Personenbeförderung, haben neben üblichen technischen Anforderungen Sicherheitskriterien zu erfüllen. So muß es beispielsweise gewährleistet sein, daß die Hand einer Person zwischen sich schließende Türen gelangt, ohne daß es zu einer Verletzung oder Personengefährdung kommt. Hieraus ergeben sich einerseits bestimmte notwendige Elastizitätseigenschaften wie Nachgiebigkeit der Dichtung in bestimmtem Umfang und andererseits das Erfordernis, daß die Türschließbewegung bei einem bestimmten Widerstand reversiert werden muß, d.h. daß sich die Tür notfalls wieder öffnen muß, um die eingeklemmte Hand oder dergleichen freizugeben. Außerdem muß, wenn sich die Tür beim Zustieg des Fahrgasts bereits schließt, der Schließvorgang abgebrochen werden und die Tür wieder in die geöffnete Stellung zurückkehren. Auf diese Weise wird es meistens vermieden, daß es überhaupt zu einem Einklemmereignis kommt.

An Türinnenkanten werden Fingerschutzleisten eingesetzt, die bei geringfügiger Druckbeaufschlagung ein Türreversierungssignal auslösen. Eine gummielastische Dichtung mit pneumatischer Fingerschutzleiste gemäß EP 1 053 120 B ist insbesondere für den Einsatz bei Innenschwenktüren bei Fahrzeugen vorgesehen, die beim Öffnungs- und Schließvorgang einen Bogen beschreiben und somit beim Schließvorgang die Richtung wechseln. Die bekannte gummielastische Dichtung umfaßt eine im Außenkantenbereich der Stirnleiste angeformte, sich von der Stirnwand fort erstreckende, bewegliche Dichtlippe. Die Dichtlippe ist in scharnierartiger Anlenkung angeformt und außerordentlich beweglich, und zwar schwenkbeweglich. Sie weicht leicht seitlich aus, wenn ein Druck auf sie ausgeübt wird. Auf diese Weise können die Dichtlippen von zwei Türflügeln voneinander freikommen, gleich, wie und auch wenn sie ungünstig aufeinander zu liegen kommen.

Zur Erfassung von Händen, Fremdgegenständen etc. zwischen den Dichtungen sind bei einem Typ der Dichtungsausführung Drucksensoren (beispielsweise in der DE 94 06 445.8 U1 offenbart) oder Schaltleisten an der Stirnkante der Dichtungen angeordnet worden, die eine Druckbeaufschlagung der Dichtleiste im Stirnkantenbereich in ein elektrisches Signal umwandeln bzw. als Widerstandsänderung erfassen. Hieraufhin wird dann bei Überschreiten eines bestimmten Schwellwerts ein Türöffnungssignal ausgelöst.

Es sind alternativ zu pneumatischen Fingerschutzleisten solche mit elektrischen Schaltleisten entwickelt worden. Diese enthalten meist zwei elektrisch leitende Bänder, die durch einen Isolator isoliert angeordnet sind. Bei Ausübung von Druck von außen, wenn sich z.B. ein Gegenstand oder eine Hand eines Fahrgasts eingeklemmt ist, werden die beiden leitenden Bänder zusammengeführt und lösen damit einen elektrischen Kontakt aus, der ein Türöffnungs- bzw. Reversiersignal auslöst. Eine zuverlässige Funktion solcher elektrischer Schaltleisten ist nur gegeben, wenn die von den eingeklemmten Teilen einwirkenden Kräfte mehr oder weniger rechtwinklig auf die Schaltleisten auftreffen. Elektrische Schaltleisten werden üblicherweise im Fuß des Profilquerschnitts angeordnet und die einwirkende Kraft wird über Wandungen und Stege vom Kopf bzw. der Stirnseite der Fingerschutzleiste auf den Fuß, d.h. die elektrische Schaltleiste gelenkt. Ihren Einsatz finden die elektrischen Schaltleisten somit in Fingerschutzleisten von Schwenkschiebetüren und Außenschwingtüren, also Türen, die aufeinander zu fahren oder im rechten Winkel zum Portalrahmen auftreffen und bei denen somit die Kraft beim Schließen im wesentlichen senkrecht auf den Kontakt auftrifft.

Die gattungsgemäße EP 0 280 191 A1 betrifft einen Einklemmschutz für eine Tür, wobei eine an der vorderen Türkante angeordnete Dichtleiste 2 einen nach vorne vorspringenden Steg 4 aufweist. Bei Einklemmen eines Gegenstands kommt es zu einer örtlichen starken Verformung bzw. Auslenkung des Stegs 4, die über eine in bekannter Bauart ausgeführte Betätigungsvorrichtung 8 ein Betätigen eines nicht dargestellten Schalters herbeiführt, woraufhin Stoppen und Reversieren der Schließbewegung erfolgt. Die Betätigungsvorrichtung 8 soll sich vorzugsweise über die ganze Höhe der Tür erstrecken und den nicht dargestellten Schalter enthalten.

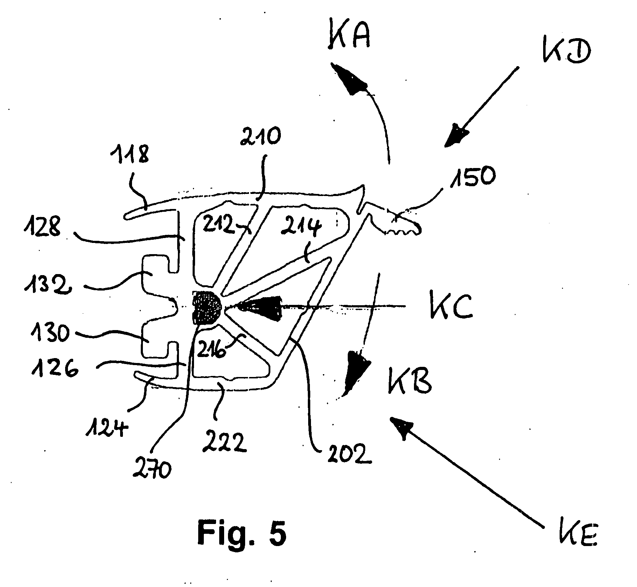

Um auch bei Innenschwenktüren elektrische Schaltleisten einsetzen zu können, wurden verschiedene Maßnahmen vorgeschlagen. So wurde versucht, innerhalb einer Fingerschutzleiste mit einer Dichtlippe 150 wie in Fig. 5 gezeigt, Radien, Rippen und Bögen 212, 214, 216 in dem Profil 202, 210, 222 einzubauen, die sicherstellen sollen, daß bei Schließkräften KD, KE ein Schließkontakt erzielt wird. Die auf die Dichtlippe wirkenden Drehkräfte sind mit KA und KB bezeichnet. Damit kann jedoch nur eine Komponente (Vektorkomponente) KC der tatsächlich einwirkenden Kraft nutzbar gemacht werden und nicht die gewünschte Auslöseernpfindlichkeit erreicht werden.

Der Erfindung liegt die Aufgabe zugrunde; ein Gummiprofil mit elektrischer Schaltleiste zu schaffen, das bei Innenschwenktüren verwendet werden kann und zuverlässig auslöst.

Diese Aufgabe ist erfindungsgemäß bei einer Fingerschutzleiste mit den Merkmalen des Anspruchs 1 gelöst. Vorteilhafte Weiterbildungen der erfindungsgemäßen Fußschutzleiste sind Gegenstand der Unteransprüche.

Eine Fingerschutzleiste gemäß der Erfindung besteht somit aus einer gummielastischen Profilleiste, die mit einer angeformten, sich von ihr fort erstreckenden, beweglichen Dichtlippe versehen ist. Dabei ist in der beweglichen Dichtlippe oder in deren Fuß oder Anlagebereich eine elektrische Schaltleiste angeordnet, die auf der Außenseite mit Rippen und Vertiefungen versehen ist.

Durch die Anordnung der elektrischen Schaltleiste in der Dichtlippe selbst oder in deren Fuß- oder Anlagebereich wird erzielt, daß die Kräfte senkrecht auf die Schaltleiste auftreffen unabhängig von dem Bogen, den die Tür beim Schließvorgang beschreibt, und zwar sowohl bei Bewegung der Dichtlippe in Schließrichtung als auch um 180° hierzu versetzt. Bei Bewegen der Lippe wird unabhängig von der Richtung der einwirkenden Kraft ein Zug oder Druck auf die Kontaktleiste ausgeübt und es kommt zu einem Schaltvorgang. Für eine sichere feste Lagerung der elektrischen Schaltleiste in ihrer Aufnahme ist die Außenseite der elektrischen Schaltleiste mit Rippen bzw. Vertiefungen versehen. Aufgrund dieser Ausgestaltung verschiebt sich die elektrische Schaltleiste bei Ausübung eines Drucks von außen nicht. Eine zuverlässige und sensibel ansprechende Auslösung des elektrischen Kontakts bzw. der Tür-Sicherheitsfunktion ist so auch bei nicht senkrecht ausgeübten Kräften sichergestellt, ohne daß angebrachte Rippenverstärkungen des Gummiprofils oder sonstige Schalthilfen benötigt werden.

Die bewegliche Dichtlippe erstreckt sich zweckmäßig entweder vom Profil- oder Hauptkörper, bei Vorhandensein einer Stirnleiste von dieser oder von der Außen- oder Stirnwand oder einem Stegabschnitt derselben fort. Bei einem vorteilhaften Ausführungsbeispiel der Erfindung ist die bewegliche Dichtlippe in scharnierartiger Anlenkung dort angeformt und in zwei Richtungen beweglich.

Die Dichtlippe ist vorzugsweise asymmetrisch angelenkt. Dies ergibt sich beispielsweise, wenn sie an einem Stegabschnitt der Außen- oder Stirnwand in scharnierartiger Anlenkung angeformt ist, und zwar an der Außenkante des Stegabschnitts. Die Dichtlippe ist so maximal beweglich. Ist der Stegabschnitt mit einem Spalt zur Außenwand angeformt, ergibt sich ein Anschlag des Stegabschnitts an der Außenwand.

Durch eine stegartige Ausbildung der den Aufnahmeraum der elektrischen Schaltleiste begrenzenden Wand oder eine entsprechend dimensionierte Wanddicke auf der der beweglichen Dichtlippe zu- und abgewandten Seite wird eine hohe Flexibilität der Wand erreicht und so ergibt sich bei Auslenkung der beweglichen Dichtlippe in beide Richtungen leicht eine Auslösung eines Schaltkontaktes. Wird die Wand auf der der beweglichen Dichtlippe abgewandten Seite mit einer Aussparung oder Einbuchtung versehen, so unterstützt diese Ausgestaltung das für einen sicheren Schaltvorgang benötigte Deformationsvermögen der Wand.

Die Dichtlippe ist bei einem Ausführungsbeispiel der Erfindung flügelartig ausgebildet und/oder weist außerhalb des Anformbereichs zumindest bereichsweise eine größere Wandstärke auf. Dadurch ist sie flexibel.

Vorzugsweise ist die elektrische Schaltleiste mit minimalem Spiel eingebaut. Auf diese Weise wird verhindert, daß die elektrische Schaltleiste bzw. der betreffende Profilkörper sich im Gummiprofil verdreht oder den Kräften ausweicht.

Vorteilhaft ist die erfindungsgemäße gummielastische Profilleiste mit elastischer Schaltleiste kombiniert mit einer pneumatisch schaltenden Fingerschutzleiste. Hierzu ist sie mit einer luftdicht abgeschlossenen Hohlkammer ausgebildet, deren Volumen sich bei Druckbeaufschlagung von außen ändert und an die ein Druckschalter angeschlossen ist, der eine sich aus der Volumenänderung ergebende Druckdifferenz in ein Ausgangssignal umwandelt. Auf diese Weise wird eine doppelte Auslösesicherheit erzielt. Außerdem ergibt sich die Möglichkeit einer permanenten einfachen und zuverlässigen Funktionsüberwachung.

Eine Ausführungsform der Fingerschutzleiste gemäß der Erfindung besteht somit aus einer gummielastischen Profilleiste, die mit einer angeformten, sich von ihr fort erstreckenden, beweglichen Dichtlippe versehen ist. Dabei ist in der beweglichen Dichtlippe oder im Fuß- oder Anlagebereich der beweglichen, vorzugsweise schwenkbeweglichen Dichtlippe eine elektrische Schaltleiste angeordnet, die auf der Außenseite mit Rippen und Vertiefungen versehen ist. Zwischen zwei Rippen ist ein Bogen auf der Außenseite der Schaltleiste gebildet und auf der gegenüberliegenden Außenseite der Schaltleiste ist eine in bezug auf den Scheitelpunkt des Bogens asymmetrisch angeordnete Vertiefung vorgesehen.

Durch diese Ausgestaltung der elektrischen Schaltleiste wird bei Bewegen von deren Einbettung unabhängig von der Richtung der einwirkenden Kraft ein Druck auf die Kontakt- bzw. Schaltleiste ausgeübt und es kommt zu einem Schaltvorgang. Die Schaltleiste eignet sich daher für den Einsatz in flexiblen Aufnahmen und spricht bereits bei kurzem Verformungsweg bzw. praktisch direkt auf Druckausübung auf die Fingerschutzleiste an, wobei ein Schaltimpuls ausgelöst wird.

Vorzugsweise ist die Vertiefung und oder der Bogen asymmetrisch in bezug auf die Querschnittslängserstreckung der Schaltleiste angeordnet. Insbesondere können zwei Vertiefungen asymmetrisch in bezug auf die Querschnittlängserstreckung bis an die Schaltelemente der elektrischen Schaltleiste geführt sein, wodurch sich quasi direkt wirkende Drucknasen ergeben. Wenn ein Druck auf die Fingerschutzleiste ausgeübt wird, kann dann durch den resultierenden asymmetrischen Versatz der Druckpunkte der durch die resultierende Verformung der Einbettung auf die Kontaktleiste wirksame Hebelarm-vergrößert werden. Die Schaltkraft ist infolgedessen verringert und das Ansprechen empfindlicher.

Bei einer bevorzugten Ausführungsform der Erfindung ist die Dichtlippe über einen Hebelarm mit einer Außenseite der Schaltleiste gekoppelt und über Druckkontaktpunkte mit der anderen Außenseite der Schaltleiste in Eingriff bringbar, wodurch die Betätigung der Schaltleiste quasi direkt bei Druckbeaufschlagung der Fingerschutzleiste und damit besonders rasch erfolgt.

Die Dichtlippe ist vorzugsweise flügelartig ausgebildet und mit dem Flügelbereich in Richtung des Druckkontakts mit der anderen Außenseite der Schaltleiste verschwenkbar. Auf diese Weise ist die Dichtlippe sehr flexibel und leicht ansprechend.

Gemäß einem vorteilhaften Ausführungsbeispiel der Erfindung ist die Dichtlippe flügelartig und in ihrem Fußbereich zu einem die Schaltleiste umgreifenden hebelartigen Stegabschnitt geformt. Die Dichtlippe ist somit selbst als Hebel ausgebildet. Zweckmäßig ist dabei benachbart dem hebelartigen Stegabschnitt ein Spalt in der Stirnleiste der Profilleiste gebildet, dessen Spitze oder Scheitelpunkt eine Lage im wesentlichen gegenüber der asymmetrisch angeordneten Vertiefung der Schaltleiste hat. Durch diese geometrische Ausgestaltung des Dichtlippenfußes ist die Auslenkung und Verformung des Fußbereichs der Dichtlippe flexibler und damit auch rascher und es kann eine zuverlässige Druckauslösung der Schaltleiste auch mit Verformung der Dichtlippe nach außen erreicht werden.

Ein wesentlicher Vorteil der Ausführung der Fingerschutzleiste mit asymmetrisch angeordneter Vertiefung ist, daß mit Verformung der Dichtlippe nach innen, d.h. in das Fahrzeuginnere, ein Druck auf eine Seite der Schaltleiste ausgeübt wird, der zur Schaltung führt. Wird die Dichtlippe nach außen gedrückt, kann im wesentlichen sofort eine Hebelkraft auf die andere Seite ausgeübt werden, die zur Auslösung führt. Zur Schaltauslösung wird somit in beiden Richtungen eine Druckausübung durch die Dichtlippenauslenkung genutzt, wobei der Schaltweg gering ist.

Die Erfindung wird im folgenden weiter anhand von Ausführungsbeispielen und der Zeichnung beschrieben. Diese Darstellung dient lediglich zur Veranschaulichungszwecken und soll die Erfindung nicht auf die konkret angegebenen Merkmalskombinationen einschränken. Es zeigen:
- Fig. 1: eine schematische Draufsicht auf ein Profil gemäß einem ersten Ausführungsbeispiel der erfindungsgemäßen Fingerschutzleiste,
- Fig. 2: eine vergrößerte Stirnansicht einer Kontaktleiste gemäß Ansicht "X" in Fig. 1,
- Fig. 3: eine vergrößerte Schnittansicht einer weiteren Kontaktleiste, die die Anordnung der leitenden Bänder veranschaulicht,
- Fig. 4: eine schematische Draufsicht auf ein Profil gemäß einem zweiten Ausführungsbeispiel der erfindungsgemäßen Fingerschutzleiste und
- Fig. 5: eine schematische Draufsicht auf ein Profil einer Fingerschutzleiste gemäß Stand der Technik.

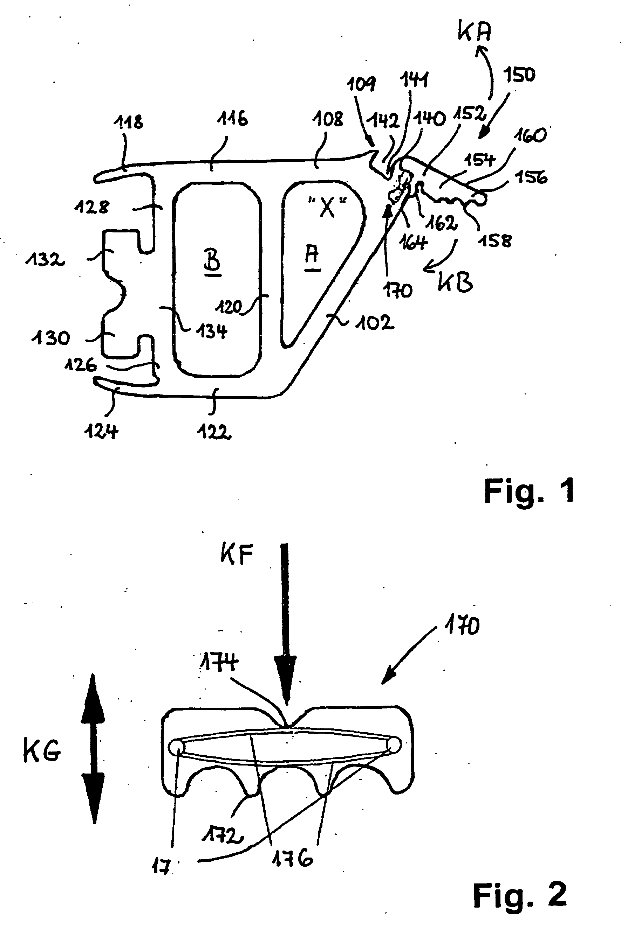

Eine in Fig. 1 dargestellte erfindungsgemäße Dichtung umfaßt eine Rück-, Innen-, Außen- und Stirnwand. Die Stirnwand weist eine Stirnleiste 102 auf, die sich von der Dichtungsinnenwand zur Dichtungsaußenwand, schräg nach außen vorstehend erstreckt. An die Stirnleiste 102 schließt sich auf der Außenseite ein kurzer Außensteg 108 an, mit dem sie einstückig verbunden ist. An den Außensteg 108 schließt sich in Türrichtung ein verhältnismäßig gerader Außenabschnitt 116 an, der in eine sich in seiner Verlängerung erstreckende Außenlippe 118 übergeht. Im Übergangsbereich zwischen dem Außensteg 108 und dem Außenabschnitt 116 erstreckt sich ein Quersteg 120 in etwa in einem rechten Winkel zur Innenkante der Stirnleiste 102 hin, in den er übergeht. Damit ist eine Luftkammer A zwischen dem Quersteg 120, der Stirnleiste 102 und dem Außensteg 108 gebildet.

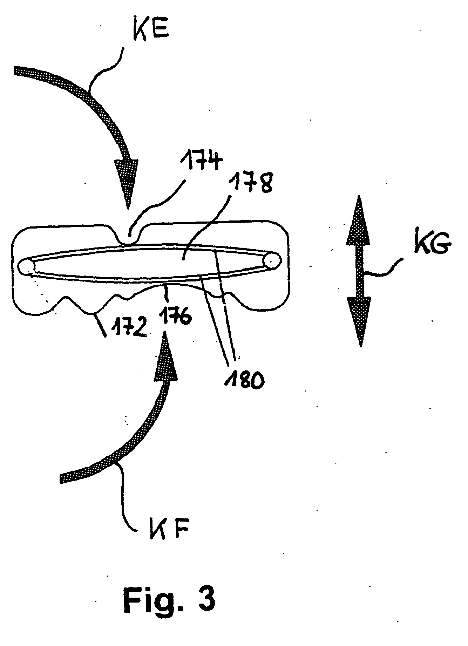

An der Außenkante der Stirnleiste 102 ist ein hebelartiger Stegabschnitt 140 angeformt, in dem eine später noch beschriebene und in Fig. 2 und 3 dargestellte elektrische Kontaktleiste 170 mit minimalem Spiel sitzt. Zur benachbarten Außenwand bzw. deren Stegabschnitt 108 hin ist ein Spalt 142 gebildet. Der Stegabschnitt 108 endet in einer nach außen weisenden Nase 109, die als Wind- und Regenwasserabweiser dient, während die Stirnleiste 102 gegenüberliegend der Kontaktleiste 170 eine Außenwölbung 162 trägt.

An dem Stegabschnitt 140 ist eine flügelartig ausgebildete Dichtlippe 150 angeformt derart, daß sich eine scharnierartige Auslenkbarkeit der Dichtlippe in bezug auf den Stegabschnitt 140 ergibt. Benachbart dem Stegabschnitt 140 befindet sich ein Bereich 152 der Dichtlippe mit geringer Lippenbreite, der den Scharnierbereich darstellt. Daran schließt sich ein Bereich 154 mit größerer Wandstärke und an diesen wiederum ein Bereich 156 mit abnehmender Wandstärke an. Im Bereich 154 weist die Dichtlippe auf der Innenseite Rippen 158 auf. Die Außenseite 160 der Dichtlippe 150 ist gerade ausgebildet.

Weiter weist die erfindungsgemäße Dichtung einen Innenabschnitt 122, der in eine Innenlippe 124 übergeht, und zwei Rückwandabschnitte 126, 128 auf. Zwischen den Rückwandabschnitten befindet sich ein Paar Montageleisten 130, 132 mit fußseitigem Aussteifungsbereich 134. Damit ist eine weitere Luftkammer B gebildet.

Die elektrische Kontaktleiste 170 ist, wie erwähnt, in Fig. 2 und 3 vergrößert dargestellt. Im Inneren ist sie in bekannter Weise mit zwei elektrisch leitenden Bändern 176 und dazwischen liegendem Isolator 178 ausgebildet. Die beiden Bänder sind aus elastischem Material, z.B. Metall mit Vorspannung oder aus Elastomer. Die Vorspannkraft ist durch den Doppelpfeil KG veranschaulicht. Erfährt die elektrische Kontaktleiste 170 eine Kraftbeaufschlagung in senkrechter Richtung, so werden die beiden leitenden Bänder zusammengeführt und es wird ein elektrischer Kontakt ausgelöst. Wird die Kraft gelöst, springen die beiden Bänder wieder auseinander.

Auf der Außenseite der elektrischen Kontaktleiste 170 sind mehrere Rippen 172 bzw. Vertiefungen 174 vorgesehen. Mittels dieser Umfangskontur erfolgt eine sichere feste Lagerung der Kontaktleiste in ihrer Aufnahme derart, daß sie sich bei Ausübung eines Drucks von außen nicht verschiebt. So ist ein zuverlässiges Auslösen des elektrischen Kontakts auch bei nicht senkrecht ausgeübten Kräften sichergestellt.

Mehr im einzelnen, zwischen zwei Rippen, in der Darstellung von Fig. 3 nach rechts versetzt, ist ein Bogen 176 gebildet. Diesem gegenüber, aber etwas nach links versetzt, ist eine Vertiefung 174 vorgesehen. In bezug auf den Scheitelpunkt des Bogens ist sie asymmetrisch angeordnet. Damit stehen sich Drucknocken zur Betätigung der beiden leitenden Bänder 180 asymmetrisch gegenüber, womit eine effiziente Verspannung der beiden leitenden Bänder 180 erzielt wird.

Mittels dieser Umfangskontur erfolgt eine sichere feste Lagerung der Kontaktleiste in ihrer Aufnahme derart, daß sie sich bei Ausübung eines Drucks von außen nicht verschiebt. So ist ein zuverlässiges Auslösen des elektrischen Kontakts auch bei nicht senkrecht ausgeübten Kräften sichergestellt.

In Fig. 1 eingezeichnete Pfeile veranschaulichen die Funktion der erfindungsgemäßen Schaltleiste. Auf die Dichtlippe 150 wirken Drehkräfte KA und KB. Bei einer Verschwenkung der Dichtlippe 150 zur Außenseite wird mittels des Stegs 140 ein Druck auf die zum Spalt 142 weisende Seite ausgeübt. Die diesem zugrundeliegende Hebelkraft wird unterstützt durch die im Spalt 142 ausgebildete Spitze 141, die dem Steg 140 quasi eine Hebelspitze verleiht, d.h. es bildet sich ein Hebel, dessen Kraft wirkmäßig in den Bogen 176 eingreift und es wird somit mittels der Hebelanordnung eine Kraft KF mit der größeren Drucknase auf die Schaltleiste 170 ausübt. Wird die Dichtlippe 150 umgekehrt nach innen verschwenkt, so tritt deren verbreiterter Abschnitt 154 mit der Wölbung 162 in Eingriff und es wird über diese, den Vorsprung 164 und die Vertiefung 174 ein Druck (Kraft KF) auf die elektrische Schaltleiste 170 ausgeübt. Der Schaltdruck löst dann jeweils einen Schaltimpuls aus.

Bei der asymmetrischen Anordnung der Vertiefungen bzw. Drucknasen und der wirksamen Verspannung der elektrischen Bänder ist die Auslösekraft bei der Ausführungsform gemäß Fig. 3 verhältnismäßig gering.

Die obenstehend beschriebene Dichtung ist mit zwei Luftkammern A und B ausgestattet, die einen Betrieb auch als pneumatische Fingerschutzleiste ermöglichen. Wird beispielsweise die Hand eines Fahrgasts eingeklemmt, so wird von der Stirnseite 102 der Dichtung her ein Druck ausgeübt. Als erstes gibt die Dichtung im Bereich der Dichtlippen nach innen oder außen nach. Bei nur leicht größerer Kraft und zunächst schon gleichzeitig kommt es dann zu einem Ansprechen der elektrischen Schaltleiste. Wird eine deutlich stärkere Kraft weiter ausgeübt, kommt es zur Einbauchung der Stirnseite 102 und Rückwärtsbiegung des Querstegs 120. Die Kammer A ist dann aufgrund der Elastizität des Gummiprofils erheblich zusammengedrückt. Längst hat dann schon die pneumatische Auslösung stattgefunden.

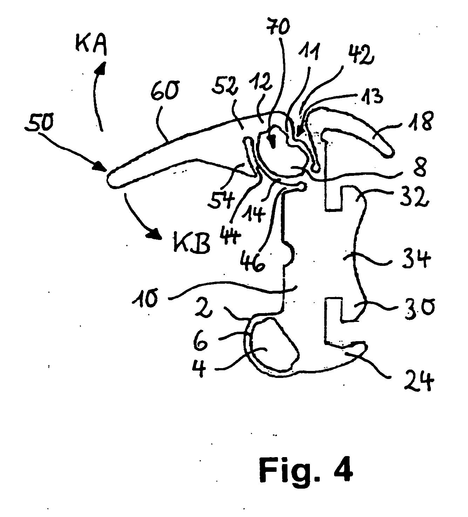

In Fig. 4 ist ein zweites Ausführungsbeispiel der erfindungsgemäßen Fingerschutzleiste gezeigt. Die Dichtung umfaßt einen Profilkörper 10, an dessen Rückseite ein Paar Montageleisten 30, 32 mit einem fußseitigen Aussteifungsbereich 34 sitzt. Von dem Profilkörper erstrecken sich jeweils in Türrichtung, d.h. nach hinten, eine Außenlippe 18 und eine Innenlippe 24.

In dem zur Innenseite liegenden Endbereich des Profilkörpers 10 ist dieser mit einer nach vorne weisenden Ausbuchtung 2 ausgebildet, in der ein Kanal 4 verläuft. Dieser ist zur Vorder- bzw. Stirnseite und zur Innenseite durch einen Stegbereich 6 umschlossen und enthält eine nicht dargestellte elektrische Schaltleiste, über die bei Berührung des Profilkörpers ein Schaltkontakt ausgelöst wird.

In dem zur Außenseite liegenden Endbereich des Profilkörpers 10 sitzt in einem Kanal 8 eine elektrische Kontaktleiste 70 mit minimalem Spiel. In der benachbarten Außenwand des Profilkörpers 10 rückseitig des Kanals 8 ist eine V-förmige Einbuchtung 42 gebildet, die sich entlang des Kanals 8 tief in den Profilkörper 10 hinein erstreckt und in Art eines Schlitzes endet. Der-Kanal ist zur Außenseite so durch einen rückwärtigen Stegbereich 11 und einen sich an diesen nach vorne anschließenden Stegbereich 12 und zur Vorder- bzw. Stirnseite durch einen Stegbereich 14 umschlossen. Der Stegbereich 14 ist an beiden Enden durch Schlitze 44, 46 verlängert. Der Stegbereich 11 weist eine scharnierartige Einbuchtung 13 auf.

Am stirnseitigen Ende des Stegbereichs 12 und außenseitigen Ende des Stegbereichs 14 ist eine flügelartig ausgebildete Dichtlippe 50 angeformt mit einem Bereich 52 mit geringer Lippenbreite, an den sich ein Bereich 54 mit größerer Wandstärke anschließt, der sich nach außen verjüngt. Der Bereich 52 stellt in Verbindung mit dem Schlitz 44 einen Scharnierbereich dar derart, daß sich eine scharnierartige Auslenkbarkeit der Dichtlippe in bezug auf den Profilkörper 10 ergibt. Die Außenseite 60 der Dichtlippe 50 ist im wesentlichen gerade ausgebildet.

Die elektrische Kontaktleiste 70 funktioniert in Verbindung mit der beweglichen Dichtlippe 50 wie folgt. Erfährt die elektrische Kontaktleiste 70 eine Kraftbeaufschlagung in senkrechter Richtung, so wird ein elektrischer Kontakt ausgelöst. Wird die Kraft gelöst, kehrt die Kontaktleiste wieder in den Ausgangszustand zurück.

In Fig. 4 eingezeichnete Pfeile veranschaulichen die Funktion der erfindungsgemäßen Schaltleiste. Auf die Dichtlippe 50 wirken Drehkräfte KA und KB. Bei einer Verschwenkung der Dichtlippe 50 zur Außenseite wird ein Zug ausgeübt, woraufhin ein Druck auf den als Hebel wirkenden Stegbereich 12 und dann auf den Stegbereich 11 bzw. Bogen ausgeübt wird, der sich aufgrunddessen elastisch zum Inneren des Kanals 8 hin deformiert, womit auf die elektrische Schaltleiste 70 ein Druck ausgeübt wird. Wird die Dichtlippe 50 umgekehrt nach innen verschwenkt, so tritt deren verbreiterter Bereich 54 mit dem Stegbereich 14 in Eingriff, der letztere wird zum Inneren des Kanals 8 hin deformiert und es wird über diesen ein Druck (Kraft KF) auf die elektrische Schaltleiste 70 ausgeübt. Der Schaltdruck löst dann jeweils einen Schaltimpuls aus.

## Patentansprüche

1. Fingerschutzleiste, bestehend aus einer gummielastischen Profilleiste, die mit einer angeformten, sich von ihr fort erstreckenden, beweglichen Dichtlippe (150, 50) versehen ist, **dadurch gekennzeichnet , daß** in der beweglichen Dichtlippe oder in deren Fuß- oder Anlagebereich eine elektrische Schaltleiste (170) angeordnet ist, die auf der Außenseite mit Rippen (172) und Vertiefungen (174) versehen ist.

2. Fingerschutzleiste nach Anspruch 1, **dadurch gekennzeichnet, daß** die bewegliche Dichtlippe (150, 50) in scharnierartiger Anlenkung angeformt ist und in zwei Richtungen beweglich ist.

3. Fingerschutzleiste nach Anspruch 1 oder 2, **dadurch gekennzeichnet, daß** die Dichtlippe (150, 50) an einem Stegabschnitt der Außen- oder Stirnwand asymmetrisch angelenkt ist.

4. Fingerschutzleiste nach einem der Ansprüche 1 bis 3, **dadurch gekennzeichnet, daß** zwischen zwei Rippen (172) ein Bogen (176) auf einer Außenseite der Schaltleiste (170) gebildet ist und auf der gegenüberliegenden Außenseite der Schaltleiste (170) eine in Bezug auf den Scheitelpunkt des Bogens (176) asymmetrisch angeordnete Vertiefung (174) vorgesehen ist.

5. Fingerschutzleiste nach Anspruch 4, **dadurch gekennzeichnet, daß** die Vertiefung (174) asymmetrisch in Bezug auf die Querschnittslängserstreckung der Schaltleiste angeordnet ist.

6. Fingerschutzleiste nach Anspruch 4 oder 5, **dadurch gekennzeichet**, daß der Bogen (176) asymmetrisch in Bezug auf die Querschnittslängserstreckung angeordnet ist.

7. Fingerschutzieiste nach Anspruch 5 und 6, **dadurch gekennzeichnet, daß** zwei Vertiefungen (174, 176) asymmetrisch in Bezug auf die Querschnittlängserstreckung bis an die Schaltelemente (180) der elektrischen Schaltleiste (170) geführt sind.

8. Fingerschutzleiste nach einem der Ansprüche 1 bis 7, **dadurch gekennzeichnet , daß** die Dichtlippe (150) über einen Hebelarm (140) mit einer Außenseite der Schaltleiste (170) gekoppelt ist und über Druckkontaktpunkte (162, 174) mit der anderen Außenseite der Schaltleiste in Eingriff bringbar ist.

9. Fingerschutzleiste nach Anspruch 8, **dadurch gekennzeichnet, daß** die Dichtlippe (150) flügelartig ausgebildet ist und mit dem Flügelbereich in Richtung des Druckkontakts mit der anderen Außenseite der Schaltleiste (170) verschwenkbar ist.

10. Fingerschutzleiste nach Anspruch 8 oder 9, **dadurch gekennzeichnet, daß** die Dichtlippe (150) flügelartig ist und in ihrem Fußbereich zu einem die Schaltleiste (170) umgreifenden hebelartigen Stegabschnitt (140) geformt ist.

11. Fingerschutzleiste nach Anspruch 10, **dadurch gekennzeichnet, daß** benachbart dem Stegabschnitt (140) ein Spalt (142) in der Stirnleiste (102) der Profilleiste-gebildet ist, dessen Spitze (141) oder Scheitelpunkt eine Lage im wesentlichen gegenüber der asymmetrisch angeordneten Vertiefung (174) der Schaltleiste (170) hat.

12. Fingerschutzleiste nach einem der Ansprüche 1 bis 11, **dadurch gekennzeichnet , daß** die elektrische Schaltleiste (170) mit minimalem Spiel eingebaut ist.

13. Fingerschutzleiste nach einem der Anspruche 1 bis 12, **dadurch gekennzeichnet , daß** in der Außenwand der Profilleiste (10) auf der zur beweglichen Dichtlippe (50) entgegengesetzten Seite der elektrischen Schaltleiste (70) eine Aussparung oder Einbuchtung (42) als Gegenanschlag oder Auslenkhilfe ausgebildet ist.

14. Fingerschutzleiste nach einem der Ansprüche 1 bis 13, **dadurch gekennzeichnet , daß** die den Aufnahmeraum (8) der elektrischen Schaltleiste (70) begrenzende Wand der Profilleiste (10) auf der zum Hauptkörper der beweglichen Dichtlippe (50) hin und auf der von diesem fort weisenden Seite stegartig (14, 11) ausgebildet ist.

15. Fingerschutzleiste nach einem der Ansprüche 1 bis 14, **dadurch gekennzeichnet , daß** in der Profilleiste (10) entgegengesetzt zur beweglichen Dichtlippe (50) und auf der dieser abgewandten Seite der elektrischen Schaltleiste (70) die deren Aufnahmeraum begrenzende Wand (11) eine Aussparung oder Einbuchtung (13) als Gegenanschlag oder Auslenkhilfe aufweist.

16. Fingerschutzleiste nach einem der Ansprüche 1 bis 15, **dadurch gekennzeichnet , daß** die gummielastische Profilleiste mit einer luftdicht abgeschlossenen Hohlkammer ausgebildet ist, deren Volumen sich bei Druckbeaufschlagung von außen ändert, und an die ein Druckschalter angeschlossen ist, der eine sich aus der Volumenänderung ergebende Druckdifferenz in ein Ausgangssignal umwandelt.

## Claims

1. Finger protection strip, consisting of a rubber-elastic profile strip which is provided with an integrally formed, movable sealing lip (150, 50) extending away from the profile strip, **characterised in that** an electrical safety strip (170) is disposed in the movable sealing lip or in the base or abutment region thereof and is provided on the outer side with ribs (172) and recesses (174).

2. Finger protection strip as claimed in claim 1, **characterised in that** the movable sealing lip (150, 50) is integrally formed in a hinge-like articulation and is movable in two directions.

3. Finger protection strip as claimed in claim 1 or 2, **characterised in that** the sealing lip (150, 50) is articulated asymmetrically to a web portion of the outer wall or end wall.

4. Finger protection strip as claimed in any one of claims 1 to 3, **characterised in that** an arc (176) is formed between two ribs (172) on an outer side of the safety strip (170) and on the opposite-lying outer side of the safety strip (170) there is provided a recess (174) which is disposed asymmetrically in relation to the apex of the arc (176).

5. Finger protection strip as claimed in claim 4, **characterised in that** the recess (174) is disposed asymmetrically in relation to the cross-sectional longitudinal extension of the safety strip.

6. Finger protection strip as claimed in claim 4 or 5, **characterised in that** the arc (176) is disposed asymmetrically in relation to the cross-sectional longitudinal extension.

7. Finger protection strip as claimed in claim 5 and 6, **characterised in that** two recesses (174, 176) extend asymmetrically in relation to the cross-sectional longitudinal extension as far as to the switching elements (180) of the electrical safety strip (170).

8. Finger protection strip as claimed in any one of claims 1 to 7, **characterised in that** the sealing lip (150) is coupled via a lever arm (140) to an outer side of the safety strip (170) and can be brought into engagement with the other outer side of the safety strip by means of pressure contact points (162, 174).

9. Finger protection strip as claimed in claim 8, **characterised in that** the sealing lip (150) is formed in a wing-like manner and can be pivoted by means of the wing region in the direction of the pressure contact with the other outer side of the safety strip (170).

10. Finger protection strip as claimed in claim 8 or 9, **characterised in that** the sealing lip (150) is wing-like and in its base region is shaped to form a lever-like web portion (140) which engages around the safety strip (170).

11. Finger protection strip as claimed in claim 10, **characterised in that** adjacent the web portion (140) there is formed a gap (142) in the end strip (102) of the profile strip, the tip (141) or apex of said gap having a position substantially opposite the asymmetrically disposed recess (174) of the safety strip (170).

12. Finger protection strip as claimed in any one of claims 1 to 11, **characterised in that** the electrical safety strip (170) is installed with minimum clearance.

13. Finger protection strip as claimed in any one of claims 1 to 12, **characterised in that** in the outer wall of the profile strip (10) on the side of the electrical safety strip (70) opposite the movable sealing lip (50) a cut-out or indentation (42) is formed as a counter stop or deflection aid.

14. Finger protection strip as claimed in any one of claims 1 to 13, **characterised in that** the wall of the profile strip (10) which defines the receiving space (8) of the electrical safety strip (70) is formed in a web-like manner (14, 11) on the side facing towards the main body of the movable sealing lip (50) and on the side facing away therefrom.

15. Finger protection strip as claimed in any one of claims 1 to 14, **characterised in that** in the profile strip (10) opposite the movable sealing lip (50) and on the side of the electrical safety strip (70) facing away therefrom, the wall (11) which defines the receiving space of said safety strip comprises a cut-out or indentation (13) as a counter stop or deflection aid.

16. Finger protection strip as claimed in any one of claims 1 to 15, **characterised in that** the rubber-elastic profile strip is formed with a hollow chamber which is sealed off in an air-tight manner and whose volume changes when pressurised externally, and to which a pressure switch is connected which converts a pressure difference resulting from the change in volume into an output signal.

## Revendications

1. Rebord anti-pince doigt, formé par un rebord profilé ayant l'élasticité du caoutchouc, qui est muni d'une lèvre d'étanchéité (150, 50) mobile, formée sur ledit rebord et orientée en s'écartant de celui-ci, **caractérisé en ce que** dans la lèvre d'étanchéité mobile ou dans la base ou la zone d'appui de celle-ci est agencée une barrette de contact (170) électrique, dont la face extérieure est munie de nervures (172) et de creux (174).

2. Rebord anti-pince doigt selon la revendication 1, **caractérisé en ce que** la lèvre d'étanchéité (150, 50) mobile est formée selon une articulation de type charnière et est mobile dans deux directions.

3. Rebord anti-pince doigt selon la revendication 1 ou 2, **caractérisé en ce que** la lèvre d'étanchéité (150, 50) est articulée asymétriquement contre une branche de la paroi extérieure ou paroi frontale.

4. Rebord anti-pince doigt selon l'une quelconque des revendications 1 à 3, **caractérisé en ce qu'**un arc (176) est formé entre deux nervures (172) sur une face extérieure de la barrette de contact (170) et sur la face extérieure opposée de la barrette de contact (170) est prévu un creux (174) disposé asymétriquement par rapport au sommet de l'arc (176).

5. Rebord anti-pince doigt selon la revendication 4, **caractérisé en ce que** le creux (174) est disposé asymétriquement par rapport à la longueur de la section de la barrette de contact.

6. Rebord anti-pince doigt selon la revendication 4 ou 5, **caractérisé en ce que** l'arc (176) est disposé asymétriquement par rapport à la longueur de la section.

7. Rebord anti-pince doigt selon les revendications 5 et 6, **caractérisé en ce que** deux creux (174, 176) sont guidés asymétriquement par rapport à la longueur de la section jusqu'aux éléments de contact (180) de la barrette de contact (170) électrique.

8. Rebord anti-pince doigt selon l'une quelconque des revendications 1 à 7, **caractérisé en ce que** la lèvre d'étanchéité (150) est couplée, par l'intermédiaire d'un bras de levier (140), à une face extérieure de la barrette de contact (170) et peut être amenée en prise avec l'autre face extérieure de la barrette de contact par l'intermédiaire de points de contact par pression (162, 174).

9. Rebord anti-pince doigt selon la revendication 8, **caractérisé en ce que** la lèvre d'étanchéité (150) est réalisée en forme d'ailette et est apte à pivoter avec la zone formant ailette vers le contact par pression avec l'autre face extérieure de la barrette de contact (170).

10. Rebord anti-pince doigt selon la revendication 8 ou 9, **caractérisé en ce que** la lèvre d'étanchéité (150) est réalisée en forme d'ailette et, au niveau de sa base, est formée pour obtenir une branche (140) en forme de levier enserrant la barrette de contact (170).

11. Rebord anti-pince doigt selon la revendication 10, **caractérisé en ce que**, à proximité de la branche (140), une fente (142) est formée dans la paroi frontale (102) du rebord profilé, dont la pointe (141) ou sommet est positionné sensiblement en face du creux (174), disposé asymétriquement, de la barrette de contact (70).

12. Rebord anti-pince doigt selon l'une quelconque des revendications 1 à 11, **caractérisé en ce que** la barrette de contact (170) électrique est mise en place avec un minimum de jeu.

13. Rebord anti-pince doigt selon l'une quelconque des revendications 1 à 12, **caractérisé en ce que** dans la paroi extérieure du rebord profilé (10), sur le côté de la barrette de contact (70), opposé à la lèvre d'étanchéité (50) mobile, est réalisé un évidement ou creux (42) formant une contre-butée ou un moyen de déviation.

14. Rebord anti-pince doigt selon l'une quelconque des revendications 1 à 13, **caractérisé en ce que** la paroi du rebord profilé (10), qui délimite le logement (8) de la barrette de contact (70), est réalisée en forme d'entretoise (14, 11) sur le côté orienté vers le corps principal de la lèvre d'étanchéité (50) mobile et sur le côté orienté en s'écartant de celui-ci.

15. Rebord anti-pince doigt selon l'une quelconque des revendications 1 à 14, **caractérisé en ce que**, dans le rebord profilé (10), à l'opposé de la lèvre d'étanchéité (50) mobile et sur le côté, détourné de celle-ci, de la barrette de contact (70), la paroi (11) délimitant le logement de cette dernière comporte un évidement ou un creux (13) réalisé sous forme de contre-butée ou de moyen de déviation.

16. Rebord anti-pince doigt selon l'une quelconque des revendications 1 à 15, **caractérisé en ce, que** le rebord profilé ayant l'élasticité du caoutchouc est réalisé avec une cavité fermée de manière étanche à l'air, dont le volume varie en cas de sollicitation en pression depuis l'extérieur, et à laquelle est raccordé un manocontacteur, par lequel une différence de pression résultant de la variation de volume est transformée en un signal de sortie.
